# EUROPEAN PATENT SPECIFICATION

(11) **EP 2 356 927 B1**
(45) Date of publication and mention of the grant of the patent: **20.02.2013**
(21) Application number: 11163688.2
(22) Date of filing: 11.09.2006
(51) Int. Cl.: A47J 29/06

(54) **Poach pod**
Pochierbecher
Nacelle à pocher

(43) Date of publication of application: 17.08.2011
(62) Divisional of application: 06814541.6
(73) Proprietor: Fusionbrands Inc., Naples, NY 14512 (US)
(72) Inventor: Stewart, Anna, Naples NY 14512 (US); Stewart, Stephen, Naples NY 14512 (US)
(74) Representative: Jordan, Volker Otto Wilhelm

(56) References cited:
- EP-A1- 1 566 125
- DE-U1- 8 906 235
- FR-A- 1 111 647
- GB-A- 622 430
- GB-A- 1 498 673
- JP-A- 1 281 059
- JP-A- 2004 141 363
- US-A- 2 404 130

## Description

### TECHNICAL FIELD

The disclosed embodiments relate to food containment devices for use during cooking, and more particularly to a device for poaching eggs. A method of using a floatable one piece containment cooking device in agreement with the preamble part of claim 1 is shown in US 2005/0211101 A1.

### BACKGROUND

Making an acceptable poached egg is a challenge for most people. One contributing factor is that poaching eggs is generally not a daily occurrence with most people. This may result in a user under-cooking or over-cooking an egg. Additionally, there is a tendency with conventional egg poachers for the egg to stick to the cooking surface, yielding unacceptable results.

There are several generally accepted features for an acceptable poached egg. One feature is an egg whose whites have been cooked to set but the yolk is still partially runny. Another feature is that the egg remains intact without losing significant volume into the water. Another feature is an egg that does not stick to the cooking device, since once the egg sticks there is egg loss that occurs and the likelihood for bursting the yolk during removal is higher.

Conventional cooking devices dedicated to poaching eggs are generally bulky and require precious cabinet space for storage. Also, with conventional poaching devices the eggs generally stick to the cooking surface of the device. Some conventional poaching devices have stainless egg shaped holders that submerge in water and have a handle for removal from water. The drawback of these devices is that they have small holes in the bottom area, some of the egg is lost through these holes, plus the egg tends to stick in these holes. Recently devices for the poaching of eggs have been made of silicon. However even in the known silicone versions the holes in the bottom cause egg loss and cause some sticking as egg hardens within these holes. This may increase the cleaning time.

Many of the conventional egg poachers have only one function - to poach eggs - and have no further utility. Also many of the convention egg poachers are designed to poach multiple eggs simultaneously. Single people, couples with different schedules, dieters, etc. may only want to poach one egg or prepare a single service portion of a food item placed into a cooking device such as a poacher.

JP 2004141363 (A) discloses a so called "boiling bag", which is provided for being used for boiling eggs 8 or the like accommodated in the bag together with water. The bag has sufficient dimensions to fit in an electric pot, has an opening to be closed with the eggs and water accommodated therein, and is suspended by squeezing an string or a band of the bag by a lidof the electric pot in a manner to retain a height to prevent hot water in the pot and hot water or water in the bag from being mixed.

DE 89 06 235.3 U1 discloses a hollow body for cooking eggs, which is to be placed in boiling water.

An egg cooking holder, comprising an egg container, is known from EP 1 566 125 A1. The device is wholly made of a flexible material and has two arms, each having a free end. The free ends of said arms are movable between a first position, in which they are spaced apart and substantially level with the egg container, and a second position, in which they are in mutual contact, and above the egg container. The free ends of the arms have reversible fastening means for allowing the ends of said arms to be temporarily joined together, to form a self-supporting structure having the function of a handle.

An egg holder for being used in cooking, namely for placing the egg to be cooked within a cooking vessel by means of a handle, is disclosed in GB 622,430. A vessel for supporting or containing eggs during boiling and subsequent consumption is diclosed in GB 1 498 673. US 2,404,130 discloses a so called strainer or egg poacher.

JP 1281059 (A) having the title "METHOD FOR PREPARING DEFORMED BOILED EGG IN MICROWAVE OVEN" proposes to obtain the boiled egg using a container having a floating plate and an upper opening to be closed by a lid, by breaking and placing a raw egg in the container, closing the lid, placing hot water in a hot water vessel of size sufficient to house the above-mentioned container, floating the container on the hot water and heating the container in a microwave oven.

From FR 1.111.647 it is known to use a mold of certain shape, which is slightly deformable under a force, for obtaining egg hard having a shape given by the mold. The mold is designed to receive all or part of a raw egg. After closing of the mold and prolonged immersion of the whole in boiling water, a product with material identical to that of egg hard is obtained, having a shape as given by the mold.

US 2005/211101 A1 discloses a receptacle for receipt of a single serving food product, comprising a body portion defining a single serving cavity formed substantially from a silicone rubber material. The body portion includes a substantially planar base portion having a rounded periphery. The base portion also has an inside surface for receipt of food product and an outside surface for contacting a support. The body portion further includes a resilient, substantially annular sidewall portion which extends upwardly and radically outwardly from the rounded periphery of the planar base portion; the annular sidewall portion having an inner surface for receipt of food product. The receptable is intended for use in baking cupcakes and/or muffins.

### SUMMARY

In view of the foregoing, the invention provides a method of cooking a food item as defined in claim 1.

Preferred embodiments are defined in the subclaims and discussed in the following.

In an exemplary embodiment the food containment cooking device is comprised of a one piece flexible bowl like structure with an inside, an outside, a bottom and a wall proceeding from the bottom that is angled outward from the bottom. This structure forms a hollowed out space, or cavity, within the structure into which food items may be placed. The bottom and the wall are dimensioned to facilitate floating in boiling water when a food item, such as an egg yolk and accompanying egg white, are contained within, e.g., the bottom is curved so the device rocks back and forth in boiling water and the walls are splayed outward to increase volume and stability. The wall thickness is about .027 inches at the bottom and graduates to .057 inches towards the top._In a preferred embodiment the device is dimensioned to provide a single serving, e.g. the poaching of one egg.

In a preferred embodiment the material used to form the food containment cooking device is made from highly heat resistant silicon. Depending on the functional characteristics desired the wall thickness may vary between .015 inches and .090 inches. In other embodiments the device may be made from flexible plastic.

In some embodiments the device may be further comprised of one or more tabs that protrude upward from the top of the wall so that a user's fingers may grasp the tabs for removing the food containment cooking device from hot water.

In other embodiments the device may be further comprised of a foot or flat portion on the bottom most portion of the bottom surface of the food containment cooking device so that the device may rest in an upright position on a counter or in the microwave.

In other embodiments the device may be further comprised of one or more holes at the top of the wall. In embodiments having tabs, the holes may be disposed therein. The holes may be used for the placement of retail tags, for hanging on a hook, to assist in the removal of the device from hot water.

In another embodiment three or more of the devices may be connected or formed together in an arrangement that maintains the floating feature while allowing the cooking of more than one serving of a food item.

When the device is in a substantially upright position it facilitates the holding of food items such as eggs, rice, cake batter, flan, frozen desserts, and the like. This holding may be during cooking, e.g. the device is placed in a pot or pan in the oven, on the stove top, microwave. This holding may be during storage in a refrigerator or freezer.

In one embodiment the food containment cooking device made of a flexible material, e.g. high temperature resistant silicon, which is floatable and is formed in one piece to have a curved bottom and a wall that seamlessly encompasses the bottom and protrudes from the bottom upward at an obtuse angle to form a cavity and a wall top edge having a plurality of undulations. In an exemplary embodiment these undulations form three peaks and three valleys. The peaks form tabs that may or may not have a hole formed therein, depending on the embodiment. The thickness of the flexible material is preferably 0.090 inches, but may be less than that thickness, depending on the cooking characteristics desired.

In some embodiments the bottom-most portion of the bottom may be flat to give the device stability when placed on a flat surface.

The device departs from certain prior art in several features. The ability to float is one. The ability to float without tipping over and spilling held food items during boiling is another. Another feature is the ability of the device to float and have the held food items surrounded by hot water for even, rapid cooking is another. Another feature is the prevention of egg matter being lost into the water. Another feature is that the smoothness of the surface of the device deters an egg sticking to the silicone. Another feature of the device is that the wall thickness of the device may be dimensioned to achieve a 4-minute soft poach or a 6-minute firm poach.

The device is designed for the boiling of a food item place therein. This is accomplished by placing the device in enough water to permit floating, resulting in heat being distributed evenly around the contained food and resulting in rapid cooking. The poaching of an egg is one use of the device in boiling water. The device can also be used to mimic a double boiler for the melting of chocolate or sugar. The preparation of flan is another food that this device would be particularly helpful in making due to the inherent non-stick features of the material and that the device floats in a water bath.

Another feature of the device is that it is also designed for the baking of food items placed therein, as well as the microwaving of food items placed therein. The device may be used to give a unique dome shape to baked or micro-waved foods.

Another aspect of the device is that it is also designed to be used as a molding vessel. The device may be positioned upside down and a melted substance, e.g. melted chocolate or sugar, drizzled over the device. The device with the drizzle may then be placed in the freezer; the device may later be removed from the freezer and the drizzled substance removed from the device by peeling the device away from drizzled substance. The arched substance that remains can then be used as a stylish accent over desserts, e.g., ice cream, pies, miniature pastries, and the like. In the upright position the device may be used as a frozen dessert cup.

Another aspect of the device is that is may be manufactured economically.

Another aspect of the device is that it may be made from readily available materials.

These and other features and advantages of the present invention will be presented in more detail in the following specification of the invention and the accompanying figures, which illustrate by way of example the principles of the invention.

There are additional features of the invention that will be described hereinafter and which will form the subject matter of the claims appended hereto. In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the scope of the present invention such as defined by the claims.

### BRIEF DESCRIPTION OF DRAWINGS

Figure 1 illustrates a perspective view of a food containment cooking device, according to an embodiment of the present invention.
Figure 2 illustrates a front plan view of a food containment cooking device, according to an embodiment of the present invention.
Figure 3 illustrates a left side plan view of a food containment cooking device, according to an embodiment of the present invention.
Figure 4 illustrates a top plan view of a food containment cooking device, according to an embodiment of the present invention.
Figure 5 illustrates a bottom plan view of a food containment cooking device, according to an embodiment of the present invention.

### DETAILED DESCRIPTION

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known operations have not been described in detail so not to unnecessarily obscure the present invention.

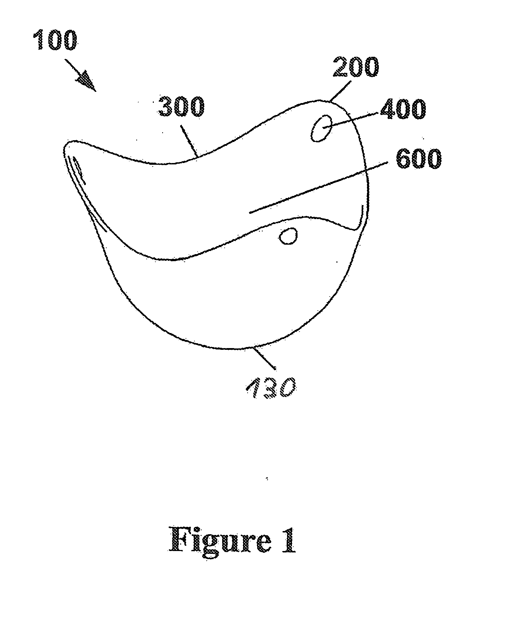

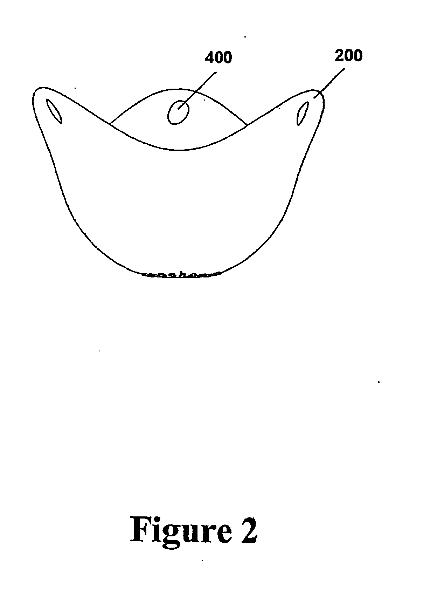

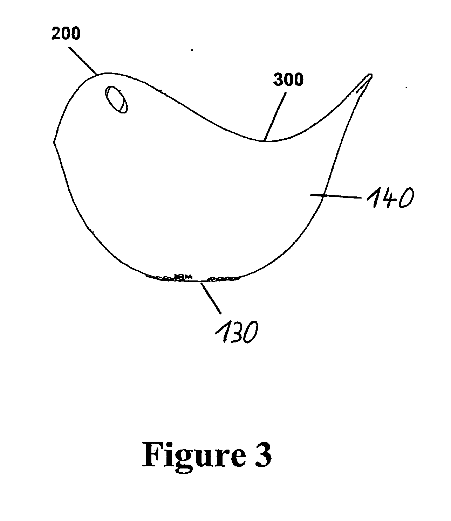

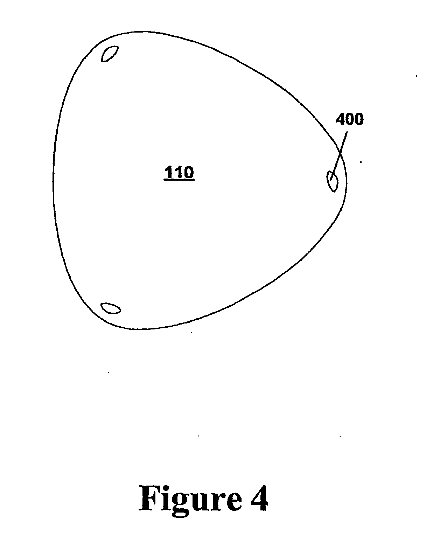

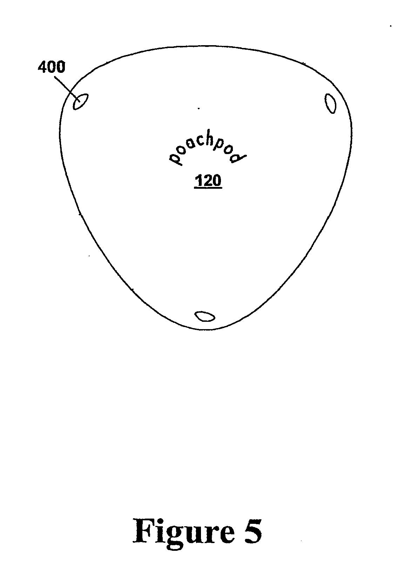

Referring now to Figure 1 through Figure 5 a food containment cooking device 100 is comprised of a bottom 130 from which a wall 140 protrudes upward at an obtuse angle and encompasses the bottom 130 forming an outside surface 120, an inside surface 110 and a cavity 600. The thickness of the wall 140 is preferably 0.090 inches or slightly thinner in order that the boiling water cooking time for an egg may be between 4 minutes and 6 minutes, based on the desired consistency of the egg yolk. In some embodiments the top of the wall 140 may be of uniform height or may have an undulating height. In one embodiment having an undulating height, the alternating peaks and valleys of the undulation form a plurality of tab 200 and valley 300. In a preferred embodiment there are three substantially equally spaced tabs 200 separated by three substantially equally spaced valleys 300. In some embodiments, at least one of tab 200 has a tab hole 400 formed within tab 200. In other embodiments a tab hole 400 is formed with each tab 200.

In one embodiment the food containment cooking device is made as follows:
- Create a metal mold by cutting a semi circular shaped cavity that will create a thin wall thickness of .090 inches or thinner.
- Dimension the cavity deep enough to hold the volume of one egg.
- Fill the mold with silicone or other suitable material.
- Cure the material.
- Remove the material from the mold.
From the foregoing, it will be appreciated that, although specific embodiments of the invention have been described herein for purposes of illustration, various modifications may be made without deviating from the scope of the invention such as defined by the claims. For example, many of the features and components described above in the context of a particular food containment cooking device configuration can be incorporated into other configurations in accordance with other embodiments of the invention. Accordingly, the invention is not limited except by the appended claims.

## Claims

1. Method of using a floatable one piece food containment cooking device (100), which is made of a flexible material and comprises:
- a bottom (130), and
- a wall (140),
wherein the bottom (130) is curved and the wall (140) seamlessly encompasses the bottom (130) and protrudes from the bottom (130) upward at an obtuse angle to form a cavity (600) and a wall top edge;
**characterized in that** the one piece food containment cooking device (100) is used for the cooking of a food item placed therein by placing the one piece food containment cooking device (100) with said food item contained therein in enough heated water to permit floating of the one piece food containment coking device (100).

2. The method of claim 1, wherein the flexible material is made from a high temperature resistant silicone composition.

3. The method of claims 1 or 2, wherein the wall top edge is provided with one or more tabs (200) protruding upwardly for allowing grasping by a user's fingers for removing the one piece food containment cooking device from hot water.

4. The method of one of claims 1 to 3, wherein the flexible material is at most 2,29 mm [0.090 inches] in thickness.

5. The method of one of claims 1 to 4, wherein the bottom (130) has a central flat portion that seamlessly protrudes into a non-central curved portion and wherein the wall seamlessly encompasses the non-central curved portion and protrudes from the non-central curved portion upward at the obtuse angle to form the cavity (600) and the wall top edge.

6. The method of one of claims 1 to 5, wherein the bottom (130) includes a foot to enable the food containment cooking device to rest in an upright position.

7. The method of one of claims 1 to 6, wherein the one piece food containment cooking device (100) has such a flexibity, that the one piece food containment cooking device (100) can have drizzled food substance in melted form over the device (100) in an upside down position, and that the device (100) is sufficiently rigid to allow the shape to be retained as a mold while said food substance which was drizzled over the device (100) in melted form is frozen, yet sufficiently flexible, to allow the device (100) to be peeled away from said food substance which was drizzled in melted form over the device (100) and subsequently frozen.

8. The method of one of claims 1 to 7, wherein the one piece food containment cooking device (100) is used for poaching an egg by placing the egg yolk and accompanying egg white as food item to be boiled therein and by placing the food containment cooking device (100) with said egg yolk and accompanying egg white contained therein in enough hot water to permit floating of the one piece food containment cooking device.

## Patentansprüche

1. Verfahren der Verwendung einer schwimmfähigen einstückigen Nahrungsmittelaufnahme-Kochvorrichtung (100), die aus flexiblem Material hergestellt ist und umfasst:
- einen Boden (130), und
- eine Wand (140),
worin der Boden (130) gekrümmt ist und die Wand (140) den Boden (130) nahtlos umgibt und vom Boden (130) mit einem stumpfen Winkel nach oben vorsteht, um einen Hohlraum (600) und einen Wandoberrand zu bilden;
**dadurch gekennzeichnet, dass** die einstückige Nahrungsmittelaufnahme-Kochvorrichtung (100) zum Kochen eines darin angeordneten Nahrungsmittelgegenstands verwendet wird, indem die einstückige Nahrungsmittelaufnahme-Kochvorrichtung (100) mit dem darin enthaltenen Nahrungsmittelgegenstand in ausreichend erhitztem Wasser angeordnet wird, um zu erlauben, dass die einstückige Nahrungsmittelaufnahme-Kochvorrichtung (100) schwimmt.

2. Das Verfahren von Anspruch 1, worin das flexible Material aus einer hochtemperaturbeständigen Silikonzusammensetzung hergestellt ist.

3. Das Verfahren von Anspruch 1 oder 2, worin der Wandoberrand mit einer oder mehreren Zungen (200) versehen ist, die nach oben vorstehen, um ein Greifen mit den Fingern eines Benutzers zu erlauben, um die einstückige Nahrungsmittelaufnahme-Kochvorrichtung aus heißem Wasser zu entnehmen.

4. Das Verfahren von einem der Ansprüche 1 bis 3, worin das flexible Material eine Dicke von höchstens 2,29 mm (0,090 Zoll) hat.

5. Das Verfahren von einem der Ansprüche 1 bis 4, worin der Boden (130) einen flachen Mittelabschnitt aufweist, der nahtlos in einen nicht mittigen gekrümmten Abschnitt vorsteht, und worin die Wand den nicht mittigen gekrümmten Abschnitt nahtlos umgibt und von dem nicht mittigen gekrümmten Abschnitt mit dem stumpfen Winkel nach oben vorsteht, um den Hohlraum (600) und den Wandoberrand zu bilden.

6. Das Verfahren nach einem der Ansprüche 1 bis 5, worin der Boden (130) einen Fuß enthält, um zu ermöglichen, dass die Nahrungsmittelaufnahme-Kochvorrichtung in einer aufrechten Stellung steht.

7. Das Verfahren nach einem der Ansprüche 1 bis 6, worin die einstückige Nahrungsmittelaufnahme-Kochvorrichtung (100) eine solche Flexibilität hat, dass die einstückige Nahrungsmittelaufnahme-Kochvorrichtung (100) eine befeuchtete Nahrungssubstanz in geschmolzener Form über der Vorrichtung (100) in umgedrehter Position haben kann, und dass die Vorrichtung (100) ausreichend steif ist, um zu erlauben, dass die Gestalt als Form erhalten bleibt, während die Nahrungsmittelsubstanz, die über der Vorrichtung (100) in geschmolzener Form befeuchtet wurde, gefriert, aber ausreichend flexibel, um ein Ablösen der Vorrichtung (100) von der Nahrungsmittelsubstanz zu erlauben, welche in geschmolzener Form über der Vorrichtung (100) befeuchtet und anschließend gefroren wurde.

8. Das Verfahren von einem der Ansprüche 1 bis 7, worin die einstückige Nahrungsmittelaufnahme-Kochvorrichtung (100) zum Pochieren eines Eis verwendet wird, indem das Eigelb und das zugehörige Eiweiß als zu kochender Nahrungsmittelgegenstand darin angeordnet werden und indem die Nahrungsmittelaufnahme-Kochvorrichtung (100) mit dem darin enthaltenen Eigelb und zugehörigen Eiweiß in ausreichend heißem Wasser angeordnet werden, um zu erlauben, dass die einstückige Nahrungsmittelaufnahme-Kochvorrichtung (100) schwimmt.

## Revendications

1. Procédé d'utilisation d'un dispositif de cuisson monobloc flottant à confinement d'aliment (100), qui est fait d'un matériau flexible et comprend :
- un fond (130), et
- une paroi (140),
dans lequel le fond (130) est incurvé et la paroi (140) englobe le fond (130) de façon intégrée et fait saillie à partir du fond (130) vers le haut à un angle obtus pour former une cavité (600) et un bord supérieur de paroi ;
**caractérisé en ce que** le dispositif de cuisson monobloc à confinement d'aliment (100) est utilisé pour la cuisson d'un aliment placé dans celui-ci en plaçant le dispositif de cuisson à confinement d'aliment (100) avec ledit aliment contenu dans celui-ci dans suffisamment d'eau chauffée pour permettre le flottement du dispositif de cuisson monobloc à confinement d'aliment (100).

2. Procédé selon la revendication 1, dans lequel le matériau flexible est fait d'une composition de silicone résistante aux hautes températures.

3. Procédé selon la revendication 1 ou 2, dans lequel le bord supérieur de paroi est pourvu d'une ou de plusieurs languettes (200) faisant saillie vers le haut pour permettre la préhension par les doigts d'un utilisateur pour ôter le dispositif de cuisson monobloc à confinement d'aliment de l'eau.

4. Procédé selon une des revendications 1 à 3, dans lequel le matériau flexible mesure au plus 2,29 mm [0,090 pouce] d'épaisseur.

5. Procédé selon une des revendications 1 à 4, dans lequel le fond (130) comporte une partie plate centrale qui fait saillie de façon intégrée dans une partie incurvée non centrale et dans lequel la paroi englobe la partie incurvée non centrale de façon intégrée et fait saillie à partir de la partie incurvée non centrale vers le haut à l'angle obtus pour former la cavité (600) et le bord supérieur de paroi.

6. Procédé selon une des revendications 1 à 5, dans lequel le fond (130) comporte un pied pour permettre au dispositif de cuisson à confinement d'aliment de reposer dans une position verticale.

7. Procédé selon une des revendications 1 à 6, dans lequel le dispositif de cuisson monobloc à confinement d'aliment (100) possède une flexibilité telle que le dispositif de cuisson monobloc à confinement d'aliment (100) puisse comporter une substance alimentaire arrosée en filet, sous forme fondue, sur le dispositif (100) dans une position à l'envers, et le dispositif (100) est suffisamment rigide pour permettre à la forme d'être maintenue en tant que moule alors que ladite substance alimentaire, qui a été arrosée en filet sur le dispositif (100) sous forme fondue, est congelée, mais suffisamment flexible pour permettre au dispositif (100) d'être décollé de ladite substance alimentaire qui a été arrosée en filet, sous forme fondue, sur le dispositif (100) et par la suite congelée.

8. Procédé selon une des revendications 1 à 7, dans lequel le dispositif de cuisson monobloc à confinement d'aliment (100) est utilisé pour pocher un oeuf en plaçant le jaune d'oeuf et le blanc d'oeuf associé en tant qu'article alimentaire destiné à être cuit dans celui-ci et en plaçant le dispositif de cuisson à confinement d'aliment (100) avec ledit jaune d'oeuf et ledit blanc d'oeuf associé contenus dans celui-ci dans suffisamment d'eau chaude pour permettre le flottement du dispositif de cuisson monobloc à confinement d'aliment.
